# EUROPEAN PATENT SPECIFICATION

(11) **EP 4 116 044 B1**
(45) Date of publication and mention of the grant of the patent: **04.03.2026**
(21) Application number: 20922685.1
(22) Date of filing: 29.10.2020
(51) Int. Cl.: B25J 11/00, B25J 9/16, B25J 19/02, A47L 9/28

(54) **MOBILE ROBOT AND CONTROL METHOD THEREFOR**
MOBILER ROBOTER UND STEUERUNGSVERFAHREN DAFÜR
ROBOT MOBILE ET SON PROCÉDÉ DE COMMANDE

(30) Priority: 04.03.2020 KR 20200027249
(43) Date of publication of application: 11.01.2023
(73) Proprietor: LG Electronics Inc., Seoul 07336 (KR)
(72) Inventor: LEE, Minho, Seoul 08592 (KR); KIM, Junghwan, Seoul 08592 (KR)
(74) Representative: Ter Meer Steinmeister & Partner
(86) International application number: PCT/KR2020/014894
(87) International publication number: WO 2021/177540

(56) References cited:
- EP-A1- 3 257 420
- JP-A- 2003 266 349
- JP-A- 2006 239 844
- KR-A- 20170 014 361
- KR-A- 20170 103 556
- KR-A- 20190 103 512
- KR-A- 20190 134 973
- US-A1- 2019 320 867

## Description

### Technical Field

The embodiment relates to a mobile robot that drives while cleaning a driving region, and a control method therefor.

### Background Art

In general, robots have been developed for industrial use and have been part of factory automation. In recent years, the field of application of robots has been further expanded, and medical robots, aerospace robots, and the like are being developed, and household robots that can be used in general households are also being made.

A representative example of the household robot is a robot cleaner, which is a type of household appliance that sucks and cleans dust or foreign matter around the robot while driving in a predetermined region by itself. Such a robot cleaner may be provided with an obstacle sensor that can avoid an obstacle while driving so as to move and clean by itself.

On the other hand, International Patent Publication No. WO 2017/191928 A1 (published on November 9, 2017) (hereinafter, referred to as prior document) discloses a cleaning robot that detects an obstacle using a 3D sensor method. Specifically, it is disclosed that an obstacle detection unit including a light emitter and a light receiver is provided to detect an obstacle using at least one of a triangulation method and a TOF method through the light emission and reception of the obstacle detection unit. According to the prior document, since an obstacle is detected using line light, when the shape of the obstacle is difficult to detect as a line, there is a limitation in that the detection of the obstacle is performed inaccurately. For instance, it becomes difficult to detect a low obstacle repeatedly appearing in a thin shape, such as when the obstacle has a thin vertical shape.

That is, the related art using a 3D sensor has a limitation in detecting an obstacle, and thus there is a problem in that it is difficult to perform efficient and appropriate driving and cleaning.

Further examples of the prior art are disclosed in the patent applications published under the following numbers: KR 2019 0134973 A, US 2019/320867 A1 and EP 3 257 420 A1.

### Disclosure of Invention

### Technical Problem

An embodiment of the present disclosure is to improve the limitations of the related art as described above.

That is, the present disclosure is to provide an embodiment of a mobile robot capable of improving the accuracy of detecting an obstacle using a 3D camera sensor and a control method therefor.

Specifically, an aspect of the present disclosure is to provide an embodiment of a mobile robot capable of accurately detecting an obstacle repeatedly appearing in a thin shape that is difficult to detect with a 3D camera sensor and a control method therefor.

Furthermore, another aspect of the present disclosure is to provide an embodiment of a mobile robot capable of performing an appropriate operation according to the type of the detected obstacle and a control method therefor.

### Solution to Problem

In order to solve the foregoing problems, a mobile robot and a control method therefor may detect an obstacle using a result of accumulating sensing results of a sensor as a solution means.

Specifically, line information sensed by a 3D camera sensor may be accumulated to generate face information, and the face information may be recognized using a recognition model to detect an obstacle.

A mobile robot using such technical features as a solution means and a control method therefor may accumulate sensing results of a sensor for a predetermined time period to generate virtual face information on a driving environment, and detect the presence or absence of an obstacle based on the face information to control driving according to the detection result.

The technical features as described above may be applied to a mobile robot, a cleaning robot, a robot cleaner, and a control method thereof, and the present specification provides an embodiment of a mobile robot and a control method therefor using the technical features as a solution means.

An embodiment of a mobile robot having the above technical features as a problem solving means may include a main body, a driving unit that moves the main body, a sensing unit that irradiates sensing light for detecting the presence or absence of an obstacle in front of the main body to generate an irradiation result, and a controller that accumulates the irradiation results of the sensing unit for a predetermined time period to generate virtual face information on a driving environment of the main body, and detects the presence or absence of an obstacle in the driving environment based on the face information to control the driving of the main body according to the detection result.

In addition, an embodiment of a method of controlling a mobile robot, the mobile robot including a main body, a driving unit that moves the main body, a sensing unit that irradiates sensing light for detecting the presence or absence of an obstacle in front of the main body to generate an irradiation result, and a controller that detects an obstacle in a driving environment of the main body based on the irradiation result of the sensing unit to control the driving of the main body, may include accumulating the irradiation results of the sensing unit during driving for a predetermined time period, generating virtual face information in the driving environment based on the accumulation result of the irradiation results, detecting an obstacle in the driving environment based on the face information, and controlling the driving of the main body according to the detection result.

### Advantageous Effects of Invention

According to an embodiment of a mobile robot and a control method therefor disclosed herein, line information sensed by a 3D camera sensor may be accumulated to generate face information, and the face information may be recognized using a recognition model to detect an obstacle, thereby having an effect capable of accurately detecting the obstacle repeatedly appearing in a thin shape that is difficult to detect with a 3D camera sensor.

Accordingly, an embodiment of a mobile robot and a control method therefor disclosed herein has an effect capable of improving the accuracy of detecting an obstacle and performing an appropriate driving operation according to the type of the detected obstacle.

That is, an embodiment of a mobile robot and a control method disclosed herein has an effect capable of enhancing the accuracy, stability and reliability of driving.

Moreover, an embodiment of a mobile robot and a control method therefor disclosed herein has an effect capable of enhancing the usability and utility of the 3D camera sensor.

### Brief Description of Drawings

FIG. 1 is a perspective view showing an example of a cleaner that performs autonomous driving.
FIG. 2 is a plan view of the cleaner that performs autonomous driving illustrated in FIG. 1.
FIG. 3 is a side view of the cleaner that performs autonomous driving illustrated in FIG. 1.
FIG. 4 is a block diagram showing the components of a cleaner that performs autonomous driving according to an embodiment.
FIG. 5 is a conceptual view showing an example in which a cleaner and a charging station are installed in a cleaning region.
FIG. 6 is an exemplary view of an embodiment of a mobile robot.
FIG. 7 is an exemplary view showing an example of irradiation of sensing light of a mobile robot.
FIG. 8 is an exemplary view showing an example of 3D image information of a mobile robot.
FIG. 9 is an exemplary view showing an example of face information of a mobile robot.
FIG. 10 is a conceptual view showing a face information generation process of a mobile robot.
FIG. 11 is Exemplary View 1 for explaining an embodiment of a mobile robot.
FIG. 12 is Exemplary View 2 for explaining an embodiment of a mobile robot.
FIG. 13 is Exemplary View 3 for explaining an embodiment of a mobile robot.
FIG. 14 is a flowchart showing a sequence of a control method of a mobile robot.

### Mode for the Invention

Hereinafter, an embodiment disclosed herein will be described in detail with reference to the accompanying drawings, and it should be noted that technological terms used herein are merely used to describe a specific embodiment, but not limitative to the concept of the present disclosure.

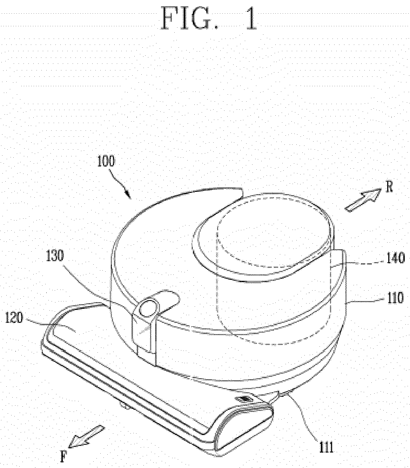

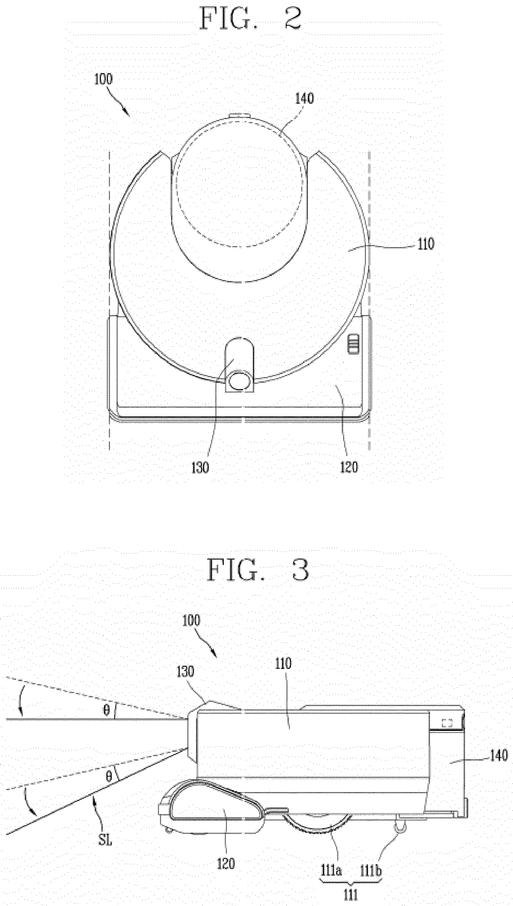

FIG. 1 is a perspective view showing an example of a robot cleaner 100 that performs autonomous driving, FIG. 2 is a plan view of the robot cleaner 100 illustrated in FIG. 1, and FIG. 3 is a side view of the robot cleaner 100 illustrated in FIG. 1.

For reference, in this specification, a mobile robot, a robot cleaner, and a cleaner that performs autonomous driving may be used in the same sense.

Referring to FIGS. 1 through 3, the robot cleaner 100 performs a function of cleaning a floor while driving on a predetermined region by itself. Cleaning of a floor mentioned here includes sucking dust (including foreign matter) on the floor or mopping the floor.

The robot cleaner 100 includes a cleaner body 110, a suction unit 120, a sensing unit (sensing part) 130, and a dust container 140.

The cleaner body 110 is provided with a controller (not shown) for controlling the robot cleaner 100 and a wheel unit 111 for driving the robot cleaner 100. The robot cleaner 100 may move forward, backward, leftward and rightward by the wheel unit 111.

The wheel unit 111 includes a main wheel 111a and a sub wheel 111b.

The main wheels 111a are provided on both sides of the cleaner body 110 and configured to be rotatable in one direction or another direction according to a control signal of the controller. Each of the main wheels 111a may be configured to be drivable independently from each other. For example, each of the main wheels 111a may be driven by a different motor.

The sub wheel 111b is configured to support the cleaner body 110 along with the main wheel 111a and assist the driving of the robot cleaner 100 by the main wheel 111a. This sub wheel 111b may also be provided in the suction unit 120 to be described later.

As described above, the controller is configured to control the driving of the wheel unit 111 in such a manner that the robot cleaner 100 autonomously drives on the floor.

Meanwhile, a battery (not shown) for supplying power to the robot cleaner 100 is mounted on the cleaner body 110. The battery may be configured to be rechargeable, and configured to be detachable from a bottom portion of the cleaner body 110.

The suction unit 120 is disposed to protrude from one side of the cleaner body 110, and is configured to suck air containing dust. The one side may be a side where the cleaner body 110 drives in a forward direction F, that is, a front side of the cleaner body 110.

In the drawing, it is shown that the suction unit 120 has a shape that protrudes from one side of the cleaner body 110 to both front and left and right sides thereof. Specifically, a front-end portion of the suction unit 120 is disposed at a position spaced forward from one side of the cleaner body 110, and both left and right end portions of the suction unit 120 are disposed at positions spaced apart from one side of the cleaner body 110 to left and right sides thereof, respectively.

As the cleaner body 110 is defined in a circular shape, and both sides of a rear end portion of the suction unit 120 protrude from the cleaner body 110 to the left and right sides, respectively, a vacant space, that is, a gap, may be formed between the cleaner body 110 and the suction unit 120. The vacant space is a space between both left and right end portions of the cleaner body 110 and both left and right end portions of the suction unit 120, and has a shape recessed in an inward direction of the robot cleaner 100.

The suction unit 120 may be detachably coupled to the cleaner body 110. When the suction unit 120 is separated from the cleaner body 110, a mop module (not shown) may be detachably coupled to the cleaner body 110 to replace the separated suction unit 120. Accordingly, the user may mount the suction unit 120 on the cleaner body 110 when the user wants to remove dust on the floor, and may mount the mop module on the cleaner body 110 when the user wants to mop the floor.

The cleaner body 110 is provided with the sensing unit 130. As shown, the sensing unit 130 may be disposed on one side of the cleaner body 110 where the suction unit 120 is located, that is, at a front side of the cleaner body 110.

The sensing unit 130 may be disposed to overlap the suction unit 120 in a vertical direction of the cleaner body 110. The sensing unit 130 is disposed at an upper portion of the suction unit 120 to detect an obstacle or geographic feature in front of the robot cleaner 100 so that the suction unit 120 located at the forefront of the robot cleaner 100 does not collide with the obstacle.

The sensing unit 130 is configured to additionally perform a sensing function other than the detecting function. This will be described in detail later.

A dust container accommodating part is provided in the cleaner body 110, and the dust container 140 for separating and collecting dust in the sucked air is detachably coupled to the dust container accommodating part. As shown, the dust container accommodating part may be disposed on the other side of the cleaner body 110, that is, at a rear side of the cleaner body 110.

A part of the dust container 140 may be accommodated in the dust container accommodating part, but another part of the dust container 140 may be disposed to protrude toward a rear side of the cleaner body 110 (i.e., a reverse direction (R) opposite to a forward direction (F)).

The dust container 140 has an inlet through which air containing dust is introduced and an outlet through which air separated from dust is discharged, and the inlet and the outlet are configured to communicate with a first opening and a second opening, respectively, disposed on an inner wall of the dust container accommodating part when the dust container 140 is mounted on the dust container accommodating part.

According to such a connection relationship, air containing dust introduced through the suction unit 120 flows into the dust container 140 through an intake passage inside the cleaner body 110, and air and dust are separated from each other while passing through a filter or cyclone of the dust container 140. Dust is collected in the dust container 140, and air is discharged from the dust container 140, and finally discharged to an outside through an exhaust port through an exhaust passage inside the cleaner body 110.

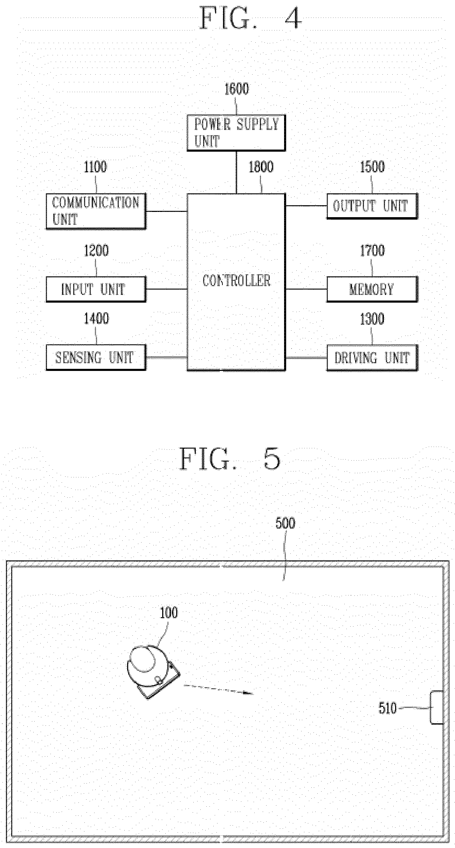

An embodiment related to the components of the robot cleaner 100 will be described below with reference to FIG. 4.

The robot cleaner 100 or the mobile robot according to an embodiment of the present disclosure may include at least one of a communication unit 1100, an input unit 1200, a driving unit 1300, a sensing unit 1400, an output unit 1500, a power supply unit 1600, a memory 1700, and a controller 1800, or a combination thereof.

Here, it is needless to say that the components shown in FIG. 4 are not essential, and thus a robot cleaner having more or fewer components than shown in FIG. 4 may of course be implemented. Hereinafter, each component will be described.

First, the power supply unit 1600 includes a battery that can be charged by an external commercial power source to supply power to the mobile robot. The power supply unit 1600 supplies driving power to each of the components included in the mobile robot to supply operating power required for the mobile robot to drive or perform a specific function.

Here, the controller 1800 may detect the remaining power of the battery, and control the battery to move power to a charging stand connected to the external commercial power source when the remaining power is insufficient, and thus a charge current may be supplied from the charging stand to charge the battery. The battery may be connected to a battery detection unit, and a battery remaining amount and a charging state may be delivered to the controller 1800. The output unit 1500 may display the remaining battery level on the screen by the controller.

The battery may be located in a lower portion of the center of the robot cleaner or may be located at either one of the left and right sides. In the latter case, the mobile robot may further include a balance weight for eliminating a weight bias of the battery.

The controller 1800 performs a role of processing information based on an artificial intelligence technology and may include at least one module for performing at least one of learning of information, inference of information, perception of information, and processing of a natural language.

The controller 1800 may use a machine learning technology to perform at least one of learning, inference and processing of a large amount of information (big data), such as information stored in the cleaner, environment information around the cleaner, information stored in a communicable external storage, and the like. Furthermore, the controller 1800 may predict (or infer) at least one executable operation of the cleaner based on information learned using the machine learning technology, and control the cleaner to execute the most feasible operation among the at least one predicted operation.

The machine learning technology is a technology that collects and learns a large amount of information based on at least one algorithm, and determines and predicts information based on the learned information. The learning of information is an operation of recognizing the features of information, rules and judgment criteria, quantifying a relation between information and information, and predicting new data using the quantified patterns.

Algorithms used by the machine learning technology may be algorithms based on statistics, for example, a decision tree that uses a tree structure type as a prediction model, an artificial neural network that mimics neural network structures and functions of living creatures, genetic programming based on biological evolutionary algorithms, clustering of distributing observed examples to a subset of clusters, a Monte Carlo method of computing function values as probability using randomly-extracted random numbers, and the like.

As a field of machine learning technology, deep learning technology refers to a technology that performs at least one of learning, determining, and processing information using a deep neural network (DNN) algorithm. The deep neural network (DNN) may have a structure of connecting between layers and transferring data between the layers. This deep learning technology may be employed to learn a vast amount of information through the deep neural network (DNN) using a graphic processing unit (GPU) optimized for parallel computing.

The controller 1800 may use training data stored in an external server or a memory, and may include a learning engine for detecting a characteristic for recognizing a predetermined object. Here, features for recognizing an object may include the size, shape, and shade of the object.

Specifically, when the controller 1800 inputs a part of images acquired through the camera provided on the cleaner into the learning engine, the learning engine may recognize at least one object or organism included in the input images.

As described above, when the learning engine is applied to driving of the cleaner, the controller 1800 may recognize whether an obstacle such as a chair leg, a fan, or a specific shape of balcony gap, which obstructs the driving of the cleaner, is present around the cleaner, thereby enhancing the efficiency and reliability of the driving of the cleaner.

On the other hand, the foregoing learning engine may be mounted on the controller 1800 or on an external server. When the learning engine is mounted on an external server, the controller 1800 may control the communication unit 1100 to transmit at least one image to be analyzed, to the external server.

The external server may input the image transmitted from the cleaner into the learning engine and thus recognize at least one thing or creature included in the image. Moreover, the external server may transmit information related to the recognition result back to the cleaner. Here, the information related to the recognition result may include information related to a number of objects, a name of each object, included in the image that is subjected to analysis.

Meanwhile, the driving unit 1300 may be provided with a motor to drive the motor, thereby rotating the left and right main wheels in both directions to rotate or move the main body. The driving unit 1300 may allow the main body of the mobile robot to move forward, backward, left, right, drive in a curve, or rotate in place.

Meanwhile, the input unit 1200 receives various control commands for the robot cleaner from the user. The input unit 1200 may include one or more buttons, for example, the input unit 1200 may include an OK button, a set button, and the like. The OK button is a button for receiving a command for confirming sensing information, obstacle information, position information, and map information from the user, and the set button is a button for receiving a command for setting the information from the user.

In addition, the input unit 1200 may include an input reset button for canceling a previous user input and receiving a user input again, a delete button for deleting a preset user input, a button for setting or changing an operation mode, a button for receiving a command to be returned to the charging stand, and the like.

Furthermore, the input unit 1200, such as a hard key, a soft key, a touch pad, or the like, may be provided on an upper portion of the mobile robot. In addition, the input unit 1200 may have a form of a touch screen along with the output unit 1500.

On the other hand, the output unit 1500 may be provided on an upper portion of the mobile robot. Of course, the installation position and installation type may vary. For example, the output unit 1500 may display a battery state, a driving mode, and the like on the screen.

In addition, the output unit 1500 may output state information inside the mobile robot detected by the sensing unit 1400, for example, a current state of each configuration included in the mobile robot. Moreover, the output unit 1500 may display external state information, obstacle information, position information, map information, and the like detected by the sensing unit 1400 on the screen. The output unit 1500 may be formed with any one of a light emitting diode (LED), a liquid crystal display (LCD), a plasma display panel, and an organic light emitting diode (OLED).

The output unit 1500 may further include an audio output device for audibly outputting an operation process or an operation result of the mobile robot performed by the controller 1800. For example, the output unit 1500 may output warning sound to the outside in response to a warning signal generated by the controller 1800.

In this case, the audio output device may be a device, such as a beeper, a speaker or the like for outputting sounds, and the output unit 1500 may output sounds to the outside through the audio output module using audio data or message data having a predetermined pattern stored in the memory 1700.

Accordingly, the mobile robot according to an embodiment of the present disclosure may output environment information on a driving region on the screen or output it as sound. According to another embodiment, the mobile robot may transmit map information or environment information to a terminal device through the communication unit 1100 to output a screen or sound to be output through the output unit 1500.

Meanwhile, the communication unit 1100 is connected to a terminal device and/or another device (also referred to as "home appliance" herein) through one of wired, wireless and satellite communication methods, so as to transmit and receive signals and data.

The communication unit 1100 may transmit and receive data with another device located in a specific region. Here, the other device may be any device capable of connecting to a network to transmit and receive data, and for example, the device may be an air conditioner, a heating device, an air purification device, a lamp, a TV, an automobile, or the like. Furthermore, the other device may be a device that controls a door, a window, a water valve, a gas valve, or the like. Furthermore, the other device may be a sensor that detects temperature, humidity, atmospheric pressure, gas, or the like.

Meanwhile, the memory 1700 stores a control program for controlling or driving the robot cleaner and resultant data corresponding thereto. The memory 1700 may store audio information, image information, obstacle information, position information, map information, and the like. Furthermore, the memory 1700 may store information related to a driving pattern.

The memory 1700 mainly uses a non-volatile memory. Here, the non-volatile memory (NVM, NVRAM) is a storage device capable of continuously storing information even when power is not supplied thereto, and for an example, the non-volatile memory may be a ROM, a flash memory, a magnetic computer storage device (e.g., a hard disk, a diskette drive, a magnetic tape), an optical disk drive, a magnetic RAM, a PRAM, and the like.

Meanwhile, the sensing unit 1400 may include at least one of an external signal detection sensor, a front detection sensor, a cliff detection sensor, a two-dimensional camera sensor, and a three-dimensional camera sensor.

The external signal detection sensor may detect an external signal of the mobile robot. The external signal detection sensor may be, for example, an infrared ray sensor, an ultrasonic sensor, a radio frequency (RF) sensor, or the like.

The mobile robot may receive a guide signal generated by the charging base using the external signal detection sensor to check the position and direction of the charging stand. At this time, the charging stand may transmit a guidance signal indicating a direction and distance so that the mobile robot can return thereto. That is, the mobile robot may determine a current position and set a movement direction by receiving a signal transmitted from the charging stand, thereby returning to the charging stand.

On the other hand, the front detection sensor may be provided at predetermined intervals at a front side of the mobile robot, specifically along a lateral outer peripheral surface of the mobile robot. The front detection sensor is located on at least one side surface of the mobile robot to detect an obstacle in front of the mobile robot. The front sensor may detect an object, especially an obstacle, existing in a movement direction of the mobile robot and transmit detection information to the controller 1800. That is, the front detection sensor may detect a protrusion, a household appliance, furniture, a wall surface, a wall corner, or the like, on a moving path of the mobile robot to transmit the information to the controller 1800.

For example, the front detection sensor may be an infrared ray (IR) sensor, an ultrasonic sensor, an RF sensor, a geomagnetic sensor, or the like, and the mobile robot may use one type of sensor as the front detection sensor or two or more types of sensors if necessary.

For an example, the ultrasonic sensor may be mainly used to detect a distant obstacle in general. The ultrasonic sensor may include a transmitter and a receiver, and the controller 1800 may determine whether or not there exists an obstacle based on whether or not ultrasonic waves radiated through the transmitter is reflected by the obstacle or the like and received at the receiver, and calculate a distance to the obstacle using the ultrasonic emission time and ultrasonic reception time.

Furthermore, the controller 1800 may compare ultrasonic waves emitted from the transmitter and ultrasonic waves received at the receiver to detect information related to a size of the obstacle. For example, the controller 1800 may determine that the larger the obstacle is, the more ultrasonic waves are received at the receiver.

In one embodiment, a plurality of (for an example, five) ultrasonic sensors may be provided along a lateral outer peripheral surface at a front side of the mobile robot. Here, the ultrasonic sensor may preferably be provided on a front surface of the mobile robot in such a manner that the transmitter and the receiver are alternately arranged.

That is, the transmitters may be disposed at right and left sides with being spaced apart from a front center of the main body or one transmitter or at least two transmitters may be disposed between the receivers so as to form a reception region of an ultrasonic signal reflected from an obstacle or the like. With this arrangement, the receiving region may be expanded while reducing the number of sensors. A transmission angle of ultrasonic waves may maintain a range of angles that do not affect different signals to prevent a crosstalk phenomenon. Furthermore, the reception sensitivities of the receivers may be set differently.

In addition, the ultrasonic sensor may be provided upward by a predetermined angle to output ultrasonic waves transmitted from the ultrasonic sensor in an upward direction, and here, the ultrasonic sensor may further include a predetermined blocking member to prevent ultrasonic waves from being radiated downward.

Meanwhile, as described above, the front detection sensor may use two or more types of sensors together, and accordingly, the front detection sensor may use any one type of sensor such as an infrared sensor, an ultrasonic sensor, an RF sensor, or the like.

For an example, the front detection sensor may include an infrared sensor as a sensor other than the ultrasonic sensor.

The infrared sensor may be provided on an outer peripheral surface of the mobile robot together with the ultrasonic sensor. The infrared sensor may also detect an obstacle existing at the front or the side to transmit obstacle information to the controller 1800. That is, the infrared sensor may detect a protrusion, a household appliance, a furniture, a wall surface, a wall corner, and the like, on the moving path of the mobile robot to transmit the information to the controller 1800. Therefore, the mobile robot may move within a specific region without collision with the obstacle.

On the other hand, a cliff detection sensor (or cliff sensor) may detect an obstacle on the floor supporting the main body of the mobile robot mainly using various types of optical sensors.

That is, the cliff detection sensor may be provided on a rear surface of the bottom mobile robot on the floor, but may of course be provided at a different position depending on the type of the mobile robot. The cliff detection sensor is a sensor located on a back surface of the mobile robot to detect an obstacle on the floor, and the cliff detection sensor may be an infrared sensor, an ultrasonic sensor, an RF sensor, a PSD (Position Sensitive Detector) sensor, or the like, which is provided with a transmitter and a receiver such as the obstacle detection sensor.

For an example, one of the cliff detection sensors may be provided on the front of the mobile robot, and two other cliff detection sensors may be provided relatively behind.

For example, the cliff detection sensor may be a PSD sensor, but may also be configured with a plurality of different kinds of sensors.

The PSD sensor detects a short and long-distance position of incident light with one p-n junction using a semiconductor surface resistance. The PSD sensor includes a one-dimensional PSD sensor that detects light only in one axial direction, and a two-dimensional PSD sensor that detects a light position on a plane. Both of the PSD sensors may have a pin photo diode structure. The PSD sensor is a type of infrared sensor that uses infrared rays to transmit infrared rays and then measure an angle of infrared rays reflected from and returned back to an obstacle so as to measure a distance. That is, the PSD sensor calculates a distance from the obstacle by using the triangulation method.

The PSD sensor includes a light emitter that emits infrared rays to an obstacle and a light receiver that receives infrared rays that are reflected and returned from the obstacle, and is configured typically as a module type. When an obstacle is detected by using the PSD sensor, a stable measurement value may be obtained irrespective of the reflectance and the color difference of the obstacle.

The controller 1800 may measure an infrared angle between an emission signal of infrared rays emitted from the cliff detection sensor toward the ground and a reflection signal reflected and received by the obstacle to detect a cliff and analyze the depth thereof.

On the other hand, the controller 1800 may determine whether or not to pass according to the ground state of the detected cliff using the cliff detection sensor, and determine whether or not to pass through the cliff according to the determination result. For example, the controller 1800 determines presence or non-presence of a cliff and a depth of the cliff through the cliff sensor, and then allows the mobile robot to pass through the cliff only when a reflection signal is detected through the cliff detection sensor.

For another example, the controller 1800 may determine a lifting phenomenon of the mobile robot using the cliff detection sensor.

On the other hand, the two-dimensional camera sensor is provided on one side of the mobile robot to acquire image information related to the surroundings of the main body during movement.

An optical flow sensor converts a downward image input from an image sensor provided in the sensor to generate image data in a predetermined format. The generated image data may be stored in the memory 1700.

Furthermore, one or more light sources may be provided adjacent to the optical flow sensor. The one or more light sources irradiate light to a predetermined region of the floor surface captured by the image sensor. That is, when the mobile robot moves in a specific region along the floor surface, a predetermined distance is maintained between the image sensor and the floor surface when the floor surface is flat. On the other hand, when the mobile robot moves on a floor surface having a nonuniform surface, the robot moves away from the floor surface by more than a predetermined distance due to the irregularities of the floor surface and obstacles. At this time, the one or more light sources may be controlled by the controller 1800 to adjust an amount of light to be irradiated. The light source may be a light emitting device capable of controlling the amount of light, for example, a light emitting diode (LED) or the like.

Using the optical flow sensor, the controller 1800 may detect a position of the mobile robot irrespective of the slip of the mobile robot. The controller 1800 may compare and analyze the image data captured by the optical flow sensor over time to calculate the movement distance and the movement direction, and calculate the position of the mobile robot on the basis of the movement distance and the movement direction. Using image information on a bottom side of the mobile robot using the optical flow sensor, the controller 1800 may perform slip-resistant correction on the position of the mobile robot calculated by another device.

The three-dimensional camera sensor may be attached to one side or a part of the main body of the mobile robot to generate three-dimensional coordinate information related to the surroundings of the main body.

That is, the three-dimensional camera sensor may be a 3D depth camera that calculates a near and far distance of the mobile robot and an object to be captured.

Specifically, the three-dimensional camera sensor may capture a two-dimensional image related to the surroundings of the main body, and generate a plurality of three-dimensional coordinate information corresponding to the captured two-dimensional image.

In an embodiment, the three-dimensional camera sensor may include two or more cameras that acquire a conventional two-dimensional image, and may be formed in a stereo vision manner to combine two or more images obtained from the two or more cameras so as to generate three-dimensional coordinate information.

Specifically, the three-dimensional camera sensor according to the embodiment may include a first pattern irradiation unit for irradiating light with a first pattern in a downward direction toward the front of the main body, and a second pattern irradiation unit for irradiating the light with a second pattern in an upward direction toward the front of the main body, and an image acquisition part for acquiring an image in front of the main body. As a result, the image acquisition part may acquire an image of a region where light of the first pattern and light of the second pattern are incident.

In another embodiment, the three-dimensional camera sensor may include an infrared ray pattern emission part for irradiating an infrared ray pattern together with a single camera, and capture the shape of the infrared ray pattern irradiated from the infrared ray pattern emission unit onto the object to be captured, thereby measuring a distance between the sensor and the object to be captured. Such a three-dimensional camera sensor may be an infrared (IR) type three-dimensional camera sensor.

In addition, in another embodiment, the three-dimensional camera sensor may include a light emitter that emits light together with a single camera to receive part of laser emitted from the light emitter and reflected from the object to be photographed, and analyze the received laser, thereby measuring a distance between the three-dimensional camera sensor and the object to be photographed. Such a three-dimensional camera sensor may be a time-of-flight (TOF) type three-dimensional camera sensor.

Specifically, the laser of the above-described three-dimensional camera sensor is configured to irradiate a laser beam in the form of extending in at least one direction. In one example, the three-dimensional camera sensor may include first and second lasers, wherein the first laser irradiates a linear shaped laser intersecting each other, and the second laser irradiates a single linear shaped laser. According to this, the lowermost laser is used to detect obstacles at a floor portion, the uppermost laser is used to detect obstacles at an upper portion, and the intermediate laser between the lowermost laser and the uppermost laser is used to detect obstacles at a middle portion.

In the following FIG. 5, an embodiment showing an installation aspect of a cleaner 100 and a charging station 510 in a cleaning region will be described.

As shown in FIG. 5, the charging station 510 for charging a battery of the cleaner 100 may be installed in a cleaning region 500. In one embodiment, the charging station 510 may be installed at an outer edge of the cleaning region 500.

Although not shown in FIG. 5, the charging station 510 may include a communication device (not shown) capable of emitting different types of signals, and the communication device may perform wireless communication with the communication unit 1100 of the cleaner 100.

The controller 1800 may control the driving unit 1300 such that the main body of the cleaner 100 is docked to the charging station 510 based on a signal received at the communication unit 1100 from the charging station 510.

The controller 1800 may move the main body in a direction of the charging station 510 when a remaining capacity of the battery falls below a limit capacity, and control the driving unit 1300 to start a docking function when the main body is close to the charging station 510.

Hereinafter, an embodiment of the mobile robot according to the present disclosure will be described.

The mobile robot 100 (hereinafter, referred to as a robot) according to the present disclosure includes a main body 110 of the robot 100, a driving unit 111 that moves the main body 100, a sensing unit 130 that irradiates sensing light for detecting the presence or absence of an obstacle to generate an irradiation result, and a controller 1800 that accumulates the irradiation result of the sensing unit 130 for a predetermined time period to generate virtual face information of a driving environment of the main body 110, and detects the presence of absence of the obstacle in the driving environment based on the face information to control the driving of the main body 110 according to the detection result.

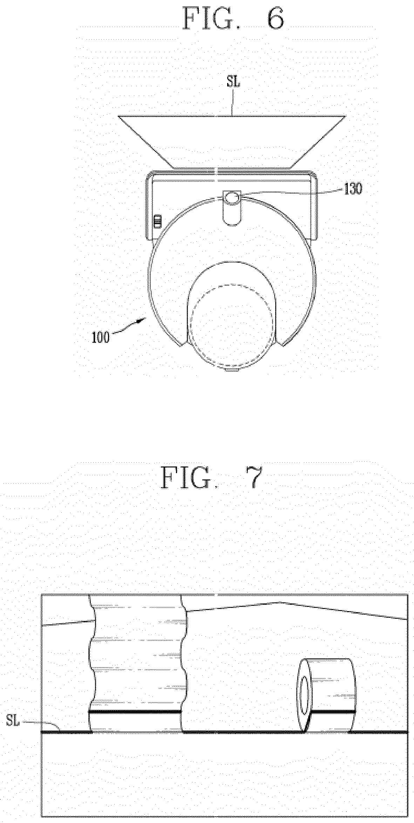

As described above, in the robot 100 including the main body 110, the driving unit 1300, the sensing unit 1400 and the controller 1800, as shown in FIG. 6, the sensing unit 130 may irradiate the sensing light SL to detect an obstacle that is present in front of the robot 100 according to the irradiation result of the sensing light SL.

Here, the sensing light SL may be laser light irradiated from the sensing unit 130, and may be irradiated in a straight-line shape.

As shown in FIG. 3, the sensing unit 130 may irradiate the sensing light SL to a front side of the main body 110 while the main body 110 is driving to irradiate the sensing light SL to an obstacle that is present in front of the main body 110 as shown in FIG. 7.

Accordingly, the controller 1800 may detect the presence or absence of an obstacle based on the irradiation result of the sensing unit 130.

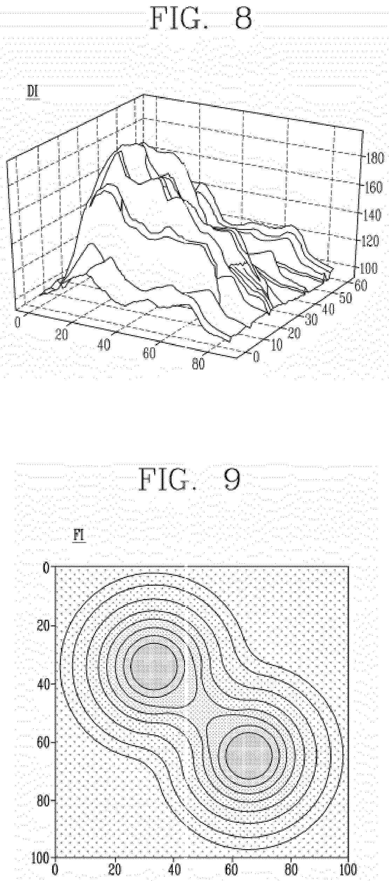

Specifically, when the sensing unit 130 irradiates the sensing light SL in front of the main body 110 as illustrated in FIG. 7 while the main body 110 is moving forward to generate an irradiation result, the controller 130 generates 3D image information DI as illustrated in FIG. 8 using the irradiation result for a predetermined time period, and generates the face information DI as illustrated in FIG. 9 from the 3D image information DI to detect the presence of absence of an obstacle based on the face information DI.

As shown in FIG. 3, the sensing unit 130 that irradiates the sensing light SL to generate the irradiation result may include a 3D camera sensor to transmit the sensing light SL to a front side of the main body 110.

That is, the sensing unit 130 may irradiate the sensing light SL to the front side of the main body 110 through the 3D camera sensor.

The 3D camera sensor may be provided to orient a floor surface of the front side of the main body to irradiate the sensing light SL to the floor surface.

For instance, as illustrated in FIG. 3, in a state of being oriented in parallel to the ground, the 3D camera sensor is provided to face the floor surface by a predetermined angle θ to irradiate the sensing light SL to the floor surface.

The 3D camera sensor may irradiate the sensing light SL to the floor surface in the form of line light.

For instance, the sensing light SL may be irradiated to the floor surface in a straight-line shape.

Accordingly, while the main body 110 moves forward, the sensing light SL may be irradiated in the form of scanning the floor surface.

In this case, an area equal to the product of a distance that the main body 110 moves and a length of the sensing light SL may be irradiated.

For example, when a linear length of the sensing light SL is a [cm] and a movement distance of the main body 110 is b [cm], the sensing light SL may be irradiated to an area equal to a x b [cm].

The 3D camera sensor may irradiate the sensing light SL to the floor surface spaced apart by a predetermined distance from the main body 110.

For instance, the sensing light SL may be irradiated to the floor surface spaced apart by a distance determined by an orientation angle of the floor surface.

The 3D camera sensor may irradiate the sensing light SL to a predetermined range of the floor surface.

For instance, the 3d camera sensor may irradiate the sensing light SL of a predetermined length on the floor surface in a straight-line shape such that the sensing light SL is irradiated in a predetermined range corresponding to a size to which the sensing light SL is irradiated.

The 3D camera sensor may irradiate the sensing light SL in a range of 320 degrees in front of the main body 110.

The sensing unit 130 may generate the irradiation result for each preset detection period and transmit the generated irradiation result to the controller 1800.

That is, the detection period may be a unit time period during which the irradiation result is generated.

The detection period may be set to a time period of 20 to 40 [ms].

For instance, it may be set to 30 [ms], and the sensing unit 130 may generate the irradiation result every 30 [ms] and transmit the generated irradiation result to the controller 1800.

Accordingly, the controller 1800 may accumulate the irradiation results generated every 30 [ms] to generate the 3D image information DI.

For a specific example, when the main body 110 moves forward by 5 [cm] for 3 seconds, the sensing unit 130 may generate the irradiation result every 30 [ms] to generate the irradiation results for a region of 5 [cm] one hundred times, and the controller 1800 may accumulate the one hundred irradiation results to generate the 3D image information DI.

As such, the sensing unit 130 may generate and transmit the irradiation result to the controller 1800 for each predetermined detection period to allow the controller 1800 to precisely generate the 3D image information DI.

The controller 1800 may generate the 3D image information DI based on a result of accumulating the irradiation results for the predetermined time period, and convert the 3D image information DI into a 2D image format including height information to generate the face information FI.

The controller 1800 may accumulate irradiation results obtained by irradiating the sensing light SL for a predetermined time period to generate the 3D image information DI as illustrated in FIG. 8, and generate the face information FI including height information from the 3D image information DI as illustrated in FIG. 9.

Here, as illustrated in FIG. 9, the height information of the face information FI may be displayed in a format that is shown differently according to the height.

For instance, height information may be shown through classification of at least one of saturation/brightness/color, or may be displayed in the format of contour lines.

The controller 1800 may generate the face information FI in the format of a rectangular surface having a predetermined size.

That is, the controller 1800 may generate the face information FI in the format of a rectangular surface having a predetermined size as illustrated in FIG. 9 from the 3D image information as illustrated in FIG. 8.

The face information FI may be virtual surface image information of a region irradiated with the sensing light SL.

The face information FI may be image information obtained by reducing the rectangular surface region irradiated with the sensing light SL.

The face information FI may be image information of a rectangular surface in which a pair of opposing surfaces have a predetermined length [cm].

For instance, it may be image information of a rectangular surface in which a pair of opposing surfaces have a length of 20 to 30 [cm].

That is, the sensing unit 130 may irradiate the sensing light SL to a region of a rectangular surface in which a pair of opposing surfaces have a length of 20 to 30 [cm] to generate the irradiation results for each detection period, and the controller 1800 may accumulate the irradiation results to generate face information FI on a region of 20 to 30 [cm] irradiated with the sensing light SL.

The controller 1800 may include a recognition unit (not shown) that analyzes the face information FI to recognize an obstacle corresponding to the face information FI to detect the obstacle through the recognition unit.

The recognition unit, which is a memory for storing data, may be included in the controller 1800.

The recognition unit may store a deep-neural-network-based recognition model learned on a map by a deep learning algorithm or a machine learning algorithm to recognize an obstacle corresponding to the face information FI through the recognition model.

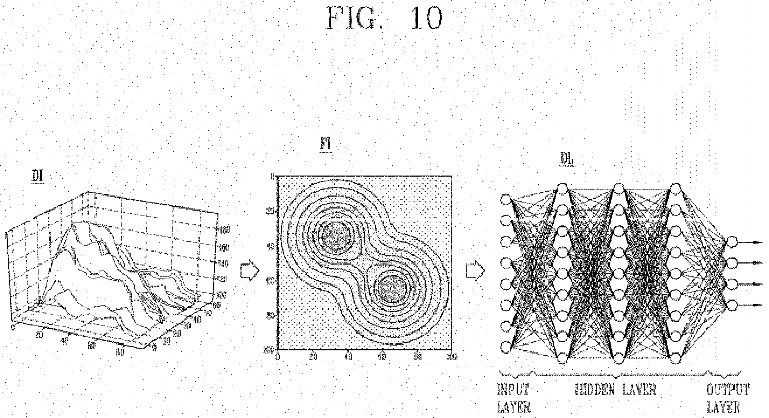

Accordingly, as shown in FIG. 10, the controller 1800 may accumulate the irradiation result to generate the 3D image information DI, convert the 3D image information DI into the face information FI, and input the face information FI to the recognition unit in which the recognition model DL is stored to recognize an obstacle corresponding to the face information FI through an output result of the recognition model DL.

As described above, the controller 1800 that accumulates the irradiation results to generate the 3D image information DI may accumulate the irradiation results according to a specific criterion to generate the 3D image information.

For instance, when the operating state of the robot 100 corresponds to a specific condition, the sensing state of the sensing unit 130 corresponds to a specific condition, or a region irradiated with the sensing light SL is above a specific reference, the controller may accumulate the irradiation results to generate the 3D image information DI.

The controller 1800 may accumulate the irradiation results when the operation of the driving unit 111 corresponds to a preset operating condition.

Here, the operating condition may denote a reference condition for the operating state of the driving unit 111.

For instance, it may be a condition for at least one of a condition in which both wheels of the driving unit 111 rotate and a rotation speed of the driving unit 111.

For a specific example, when the operating condition is set to a condition in which both wheels of the driving unit 111 rotate a predetermined speed, the irradiation results may be accumulated while both wheels of the driving unit 111 rotate above a predetermined speed.

In this case, when the robot 100 moves forward above a predetermined speed, that is, while the robot 100 moves forward above a predetermined speed, the controller 1800 may accumulate the irradiation results of the sensing light SL in front of the main body 110 to generate the 3D image information DI.

The controller 1800 may generate the face information FI when the accumulation result of the irradiation results corresponds to a preset accumulation condition.

That is, when the accumulation result satisfies a predetermined accumulation condition, the controller 1800 may generate the 3D image information DI to generate the face information

FI using the 3D image information DI.

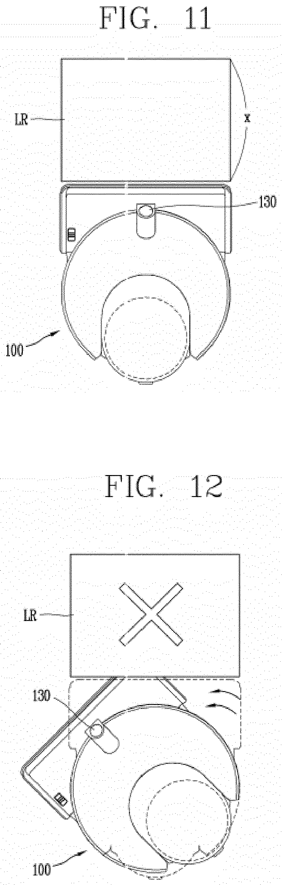

For example, as illustrated in FIG. 11, when a vertical length of the irradiation region LR irradiated with the sensing light SL becomes x [cm] to accumulate irradiation results as much as a region corresponding to the irradiation region LR, the 3D image information DI may be generated to generate the face information FI using the 3D image information DI.

The accumulation condition may be a condition for an area of the irradiation region LR irradiated with the sensing light SL.

The accumulation condition may also be a minimum accumulation condition of the irradiation result for generating the 3D image information DI.

The accumulation condition may be set according to a detection distance of the sensing unit 130.

For instance, when the sensing unit 130 irradiates the sensing light SL in front of 25 [cm] of the main body 110, it may be set based on a length within 25 [cm].

This is to prevent the position of the robot 100 from overlapping the irradiation region LR in a case where the vertical length of the irradiation region LR exceeds 25 [cm] while the robot 100 moves forward by a length above 25 [cm] when the vertical length of the irradiation region LR is set to a reference above 25 [cm].

The accumulation condition may be set as a reference for a number of accumulation results or a size of the accumulation results.

For instance, when the number of accumulation results is set to 25, the 3D image information DI may be generated when the number of irradiation results reaches 25 to generate the face information FI using the 3D image information DI.

That is, as illustrated in FIG. 11, when the vertical length of the irradiation region LR becomes x [cm] to satisfy the minimum accumulation condition of the irradiation results for generating the 3D image information DI, the controller 1800 may generate the 3D image information DI to generate the face information FI using the 3D image information DI.

As illustrated in FIG. 12, when the robot 100 rotates while irradiating the sensing light SL in front of the main body 110 during driving such that the vertical length of the irradiation region LR is less than x [cm], that is, when the accumulation of the irradiation results is stopped prior to reaching the accumulation condition and the minimum accumulation condition of the irradiation results for generating the 3D image information DI is not satisfied, the 3D image information DI may not be generated.

In this case, the controller 1800 may restart the accumulation of the irradiation results from a direction in which the main body 110 rotates.

As such, the controller 1800 that generates the 3D image information DI to generate the face information FI may control the driving of the main body 110 by limiting the movement distance of the main body 110 to a predetermined distance or less while detecting the obstacle based on the face information FI.

That is, the controller 1800 may control the robot 100 to move within the predetermined distance while the detection of the obstacle is carried out.

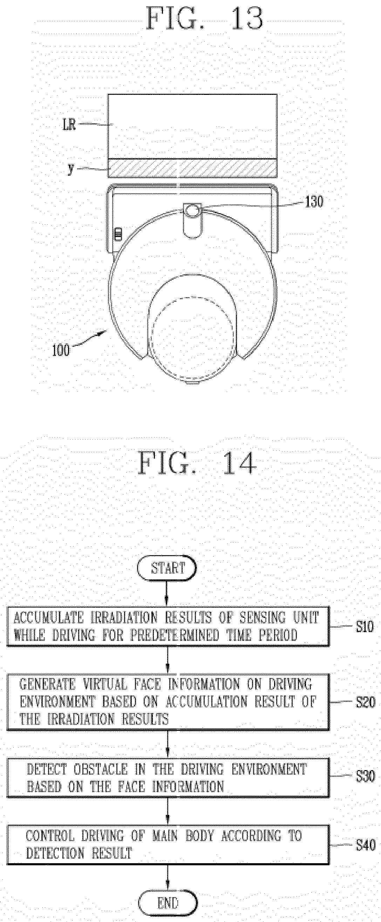

For instance, as illustrated in FIG. 13, while the detection of the obstacle is carried out, the robot 100 may be controlled to move forward only by y [cm].

The controller 1800 may control the driving of the main body 110 by limiting the movement distance of the main body 110 to a predetermined distance or less according to a time period for detecting the obstacle.

For example, when the time period for recognizing the obstacle is less than 60 [ms], while the obstacle is detected, the movement distance of the main body 110 may be limited to 2 [cm] or less to control the driving of the main body 110.

The controller 1800 may detect the type of the obstacle based on the face information FI to control the driving of the main body 110 in response to the type of the obstacle.

Subsequent to detecting the type of the obstacle, the controller 1800 may control the driving of the main body 110 in a preset driving mode according to the type of the obstacle.

For example, when the type of the obstacle corresponds to a first group, the driving of the main body 110 may be controlled in a first driving mode set in response to the first group, and when the type of the obstacle corresponds to a second group, the driving of the main body 110 may be controlled in a second driving mode set in response to the second group.

When the obstacle is either one of a threshold and a carpet, the controller 1800 may control the driving of the main body 110 to drive over the obstacle.

That is, the controller 1800 may detect that the type of the obstacle is either one of the threshold and the carpet based on the face information FI on either one obstacle of the threshold and the carpet, and then control the driving of the main body 110 to allow the main body 110 to drive over the obstacle.

When the obstacle is any one of a window frame, an electric cable, and a furniture leg, the controller 1800 may control the driving of the main body 110 to be driven by avoiding the obstacle.

That is, the controller 1800 may detect that the type of the obstacle is any one of the window frame, the electric cable, and the furniture leg based on the face information (FI) for any one obstacle of the window frame, the electric cable, and the furniture leg, and then control the driving of the main body 110 to allow the main body 110 to be driven by avoiding the obstacle.

As such, the controller 1800 that accumulates the irradiation results of the sensing unit 130 for a predetermined time period to generate virtual face information FI for a driving environment of the main body 110, and detects the presence or absence of an obstacle in the driving environment based on the face information FI to control the driving of the main body 110 according to the detection result may control the robot 100 by a control method as illustrated in FIG. 14.

The control method, which is a method of controlling, by the controller 1800, the robot 100, as illustrated in FIG. 14, includes accumulating the irradiation results of the sensing unit 130 while driving for a predetermined time period (S10), generating virtual face information FI on a driving environment based on the accumulation result of the irradiation results (S20), detecting an obstacle in the driving environment based on the face information FI (S30), and controlling the driving of the main body 110 according to the detection result (S40).

The accumulating step (S10) may be a step of accumulating, by the sensing unit 130, results of irradiating the sensing light SL in front of the main body 110 as illustrated in FIGS. 6 and 7 while the main body 110 is driving.

The generating step (S20) may be a step of accumulating the irradiation results in the accumulating step (S10), and then generating, by the controller 1800, virtual face information FI on the driving environment based on the accumulation result of the irradiation results.

In the generating step (S20), the controller 1800 may generate the 3D image information DI as illustrated in FIG. 8 based on the accumulation result, and generate the face information FI including height information as illustrated in FIG. 9 based on the 3D image information DI.

The sensing step (S30) may be a step of generating the face information FI in the generating step (S20), and then inputting, by the controller 1800, the face information FI to the input model DL of the recognition unit to recognize and detect an obstacle corresponding to the face information FI.

That is, in the generating step (S20) and the detecting step (S30), as illustrated in FIG. 10, the 3D image information DI may be generated based on the accumulation result, and the 3D image information DI may be converted into the face information FI to input the face information FI to the recognition model DL so as to recognize the obstacle.

The controlling step (S40) may be a step of controlling, by the controller 1800, the driving of the main body 110 according to a detection result in the detecting step (S30).

In the controlling step (S40), the controller 1800 may control the driving of the main body 110 in a preset driving mode according to the type of the obstacle detected in the detecting (S30).

For example, when the obstacle is either one of a threshold and a carpet, the driving of the main body 110 may be controlled to drive over the obstacle, and when the obstacle is any one of a window frame, an electric cable, and a furniture leg, the driving of the main body 10 may be controlled to be driven by avoiding the obstacle.

The control method including the accumulating step (S10), the generating step (S20), the detecting step (S30), and the controlling step (S40) may be implemented as computer-readable codes on a program-recorded medium. The computer readable medium includes all types of recording devices in which data readable by a computer system is stored. Examples of the computer-readable medium may include a hard disk drive (HDD), a solid-state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). In addition, the computer may include the controller 1800.

For embodiments of a mobile robot and a control method therefor as described above, each embodiment may of course be implemented independently or separately, and, one or more embodiments may be implemented in combination thereof. In addition, other embodiments related to a mobile robot and a control method therefor may be combined and implemented with the above-described embodiment.

A mobile robot and a control method therefor as described above may be applied and implemented to a robot cleaner, a control device for controlling the robot cleaner, a robot cleaning system, a control method for controlling the robot cleaner, and the like. However, the technology disclosed in the present disclosure is not limited thereto, and will be also applied and implemented to a mobile robot, a mobile robot system, and a method of controlling a mobile robot to which the technical concept of the technology is applicable.

## Claims

1. A mobile robot (100) comprising:
a main body (110);
a driving unit (111) that moves the main body (110);
a sensing unit (130) that irradiates sensing light (SL) for detecting the presence or absence of an obstacle in front of the main body (110) to generate an irradiation result; and
a controller (1800) that accumulates the irradiation results of the sensing unit (130) for a predetermined time period to generate virtual face information (FI) on a driving environment of the main body (110), and detects the presence or absence of an obstacle in the driving environment based on the face information (FI) to control the driving of the main body (110) according to the detection result,
**characterized in that** the controller (1800) generates the face information (FI) in the form of a rectangular surface having a predetermined size.

2. The mobile robot (100) of claim 1, wherein the sensing unit (130) comprises a 3D camera sensor to irradiate the sensing light (SL) in front of the main body (110).

3. The mobile robot (100) of claim 2, wherein the 3D camera sensor is provided to orient a floor surface in front of the main body (110), and irradiate the sensing light (SL) to the floor surface.

4. The mobile robot (100) of claim 3, wherein the 3D camera sensor irradiates the sensing light (SL) to the floor surface in the form of line light.

5. The mobile robot (100) of claim 3, wherein the 3D camera sensor irradiates the sensing light (SL) to a predetermined range of floor surface spaced apart by a predetermined distance from the main body (110).

6. The mobile robot (100) of claim 1, wherein the sensing unit (130) generates the irradiation result for each preset detection period to transmit the generated irradiation result to the controller (1800).

7. The mobile robot (100) of claim 1, wherein the controller (1800) generates 3D image information (DI) based on a result of accumulating the irradiation results for a predetermined time period, and converts the 3D image information (DI) into a 2D image format including height information to generate the face information (FI).

8. The mobile robot (100) of claim 1, wherein the controller (1800) comprises a recognition unit that analyzes the face information (FI) to recognize an obstacle corresponding to the face information (FI) so as to detect the obstacle through the recognition unit.

9. The mobile robot (100) of claim 8, wherein the recognition unit stores a deep-neural-network-based recognition model (DL) learned on a map by a deep learning algorithm or a machine learning algorithm to recognize an obstacle corresponding to the face information (FI) through the recognition model (DL).

10. The mobile robot (100) of claim 1, wherein the controller (1800) accumulates the irradiation results when the operation of the driving unit (111) corresponds to a preset operating condition.

11. The mobile robot (100) of claim 10, wherein the operating condition is a condition for at least one of a rotation condition of the driving unit (111) and a rotation speed of the driving unit (111).

12. The mobile robot (100) of claim 1, wherein the controller (1800) generates the face information (FI) when the accumulation result of the irradiation results corresponds to a preset accumulation condition.

13. The mobile robot (100) of claim 1, wherein the controller (1800) controls the driving of the main body (110) by limiting a movement distance of the main body (110) to a predetermined distance or less while detecting the obstacle based on the face information (FI).

14. The mobile robot (100) of claim 1, wherein the controller (1800) detects a type of the obstacle based on the face information (FI) to control the driving of the main body (100) in response to the type of the obstacle.

15. A method of controlling a mobile robot (100), the mobile robot (100) comprising:
a main body (110);
a driving unit (111) that moves the main body (110);
a sensing unit (130) that irradiates sensing light (SL) for detecting the presence or absence of an obstacle in front of the main body (110) to generate an irradiation result; and
a controller (1800) that detects an obstacle in a driving environment of the main body (110) based on the irradiation result of the sensing unit (130) to control the driving of the main body (110), the method comprising:
accumulating the irradiation results of the sensing unit (130) during driving for a predetermined time period;
generating virtual face information (FI) in the driving environment based on the accumulation result of the irradiation results;
detecting an obstacle in the driving environment based on the face information (FI); and controlling the driving of the main body (110) according to the detection result,
**characterized in that** in the generating step, the controller (1800) generates the face information (FI) in the form of a rectangular surface having a predetermined size.

## Patentansprüche

1. Beweglicher Roboter (100), der Folgendes umfasst:
einen Hauptkörper (110);
eine Fahreinheit (111), die den Hauptkörper (110) bewegt;
eine Erfassungseinheit (130), die zum Detektieren des Vorhandenseins oder Nichtvorhandenseins eines Hindernisses vor dem Hauptkörper (110) ein Erfassungslicht (SL) ausstrahlt, um ein Ausstrahlungsergebnis zu erzeugen; und
eine Steuereinheit (1800), die die Ausstrahlungsergebnisse der Erfassungseinheit (130) für einen vorgegebenen Zeitraum sammelt, um virtuelle Oberflächeninformationen (FI) über eine Fahrumgebung des Hauptkörpers (110) zu erzeugen, und das Vorhandensein oder Nichtvorhandensein eines Hindernisses in der Fahrumgebung auf der Grundlage der Oberflächeninformationen (FI) detektiert, um das Fahren des Hauptkörpers (110) gemäß dem Detektionsergebnis zu steuern,
**dadurch gekennzeichnet, dass**
die Steuereinheit (1800) die Oberflächeninformationen (FI) in der Form einer rechtwinkligen Fläche mit einer vorgegebenen Größe erzeugt.

2. Beweglicher Roboter (100) nach Anspruch 1, wobei die Erfassungseinheit (130) einen 3D-Kamerasensor umfasst, um das Erfassungslicht (SL) vor dem Hauptkörper (110) auszustrahlen.

3. Beweglicher Roboter (100) nach Anspruch 2, wobei der 3D-Kamreasensor derart vorgesehen ist, dass er auf eine Bodenfläche vor dem Hauptkörper (110) orientiert ist und das Erfassungslicht (SL) zur Bodenfläche ausstrahlt.

4. Beweglicher Roboter (100) nach Anspruch 3, wobei der 3D-Kamerasensor das Erfassungslicht (SL) in der Form von Linienlicht zur Bodenfläche ausstrahlt.

5. Beweglicher Roboter (100) nach Anspruch 3, wobei der 3D-Kamerasensor das Erfassungslicht (SL) zu einem vorgegebenen Bereich der Bodenfläche ausstrahlt, der um einen vorgegebenen Abstand vom Hauptkörper (110) beabstandet ist.

6. Beweglicher Roboter (100) nach Anspruch 1, wobei die Erfassungseinheit (130) das Ausstrahlungsergebnis für jeden voreingestellten Detektionszeitraum erzeugt, um das erzeugte Ausstrahlungsergebnis an die Steuereinheit (1800) zu übertragen.

7. Beweglicher Roboter (100) nach Anspruch 1, wobei die Steuereinheit (1800) auf der Grundlage eines Ergebnisses des Sammelns der Ausstrahlungsergebnisse für einen vorgegebenen Zeitraum 3D-Bildinformationen (DI) erzeugt und die 3D-Bildinformationen (DI) in ein 2D-Bildformat umsetzt, das Höheninformationen enthält, um die Oberflächeninformationen (FI) zu erzeugen.

8. Beweglicher Roboter (100) nach Anspruch 1, wobei die Steuereinheit (1800) eine Erkennungseinheit umfasst, die die Oberflächeninformationen (FI) analysiert, um ein Hindernis zu erkennen, das den Oberflächeninformationen (FI) entspricht, derart, dass das Hindernis durch die Erkennungseinheit detektiert wird.

9. Beweglicher Roboter (100) nach Anspruch 8, wobei die Erkennungseinheit ein auf einem tiefen neuralen Netz beruhendes Lernmodell (DL) speichert, das durch einen Tiefenlernalgorithmus oder einen Maschinenlernalgorithmus auf einer Karte gelernt wird, um durch das Erkennungsmodell (DL) ein Hindernis zu erkennen, das den Oberflächeninformationen (FI) entspricht.

10. Beweglicher Roboter (100) nach Anspruch 1, wobei die Steuereinheit (1800) die Ausstrahlungsergebnisse sammelt, wenn der Betrieb der Fahreinheit (111) einer voreingestellten Betriebsbedingung entspricht.

11. Beweglicher Roboter (100) nach Anspruch 10, wobei die Betriebsbedingung eine Bedingung für einen Drehzustand der Fahreinheit (111) und/oder eine Drehgeschwindigkeit der Fahreinheit (111) ist.

12. Beweglicher Roboter (100) nach Anspruch 1, wobei die Steuereinheit (1800) die Oberflächeninformationen (FI) erzeugt, wenn das Sammelergebnis der Ausstrahlungsergebnisse einer voreingestellten Sammelbedingung entspricht.

13. Beweglicher Roboter (100) nach Anspruch 1, wobei die Steuereinheit (1800) das Fahren des Hauptkörpers (110) steuert, indem ein Bewegungsabstand des Hauptkörpers (110) auf einen vorgegebenen Abstand oder kleiner begrenzt wird, während das Hindernis auf der Grundlage der Oberflächeninformationen (FI) detektiert wird.

14. Beweglicher Roboter (100) nach Anspruch 1, wobei die Steuereinheit (1800) auf der Grundlage der Oberflächeninformationen (FI) eine Art des Hindernisses detektiert, um das Fahren des Hauptkörpers (100) als Antwort auf die Art des Hindernisses zu steuern.

15. Verfahren zum Steuern eines beweglichen Roboters (100), wobei der bewegliche Roboter (100) Folgendes umfasst:
einen Hauptkörper (110);
eine Fahreinheit (111), die den Hauptkörper (110) bewegt;
eine Erfassungseinheit (130), die zum Detektieren des Vorhandenseins oder Nichtvorhandenseins eines Hindernisses vor dem Hauptkörper (110) ein Erfassungslicht (SL) ausstrahlt, um ein Ausstrahlungsergebnis zu erzeugen; und
eine Steuereinheit (1800), die auf der Grundlage des Ausstrahlungsergebnisses der Erfassungseinheit (130) ein Hindernis in einer Fahrumgebung des Hauptkörpers (110) detektiert, um das Fahren des Hauptkörpers (110) zu steuern, wobei das Verfahren Folgendes umfasst:
Sammeln der Ausstrahlungsergebnisse der Erfassungseinheit (130) während des Fahrens für einen vorgegebenen Zeitraum;
Erzeugen virtueller Oberflächeninformationen (FI) in der Fahrumgebung auf der Grundlage des Sammelergebnisses der Ausstrahlungsergebnisse;
Detektieren eines Hindernisses in der Fahrumgebung auf der Grundlage der Oberflächeninformationen (FI); und
Steuern des Fahrens des Hauptkörpers (110) gemäß dem Detektionsergebnis,
**dadurch gekennzeichnet, dass**
die Steuereinheit (180) im Erzeugungsschritt die Oberflächeninformationen (FI) in der Form einer rechtwinkligen Fläche mit einer vorgegebenen Größe erzeugt.

## Revendications

1. Robot mobile (100) comportant :
un corps principal (110) ;
une unité d'entraînement (111) qui déplace le corps principal (110) ;
une unité de détection (130) qui projette de la lumière de détection (SL) pour détecter la présence ou l'absence d'un obstacle devant le corps principal (110) afin de générer un résultat de projection ; et
une commande (1800) qui accumule les résultats de projection de l'unité de détection (130) pendant une période de temps prédéterminée pour générer des informations frontales (FI) virtuelles sur un environnement d'entraînement du corps principal (110), et détecte la présence ou l'absence d'un obstacle dans l'environnement d'entraînement sur la base des informations frontales (FI) pour commander l'entraînement du corps principal (110) en fonction du résultat de détection,
**caractérisé en ce que**
la commande (1800) génère les informations frontales (FI) sous la forme d'une surface rectangulaire ayant une taille prédéterminée.

2. Robot mobile (100) selon la revendication 1, dans lequel l'unité de détection (130) comporte un capteur de caméra 3D pour projeter la lumière de détection (SL) devant le corps principal (110).

3. Robot mobile (100) selon la revendication 2, dans lequel le capteur de caméra 3D est prévu pour orienter une surface de sol devant le corps principal (110), et projeter la lumière de détection (SL) sur la surface de sol.

4. Robot mobile (100) selon la revendication 3, dans lequel le capteur de caméra 3D projette la lumière de détection (SL) sur la surface du sol sous la forme d'une lumière linéaire.

5. Robot mobile (100) selon la revendication 3, dans lequel le capteur de caméra 3D projette la lumière de détection (SL) sur une étendue prédéterminée de surface de sol espacée du corps principal (110) par une distance prédéterminée.

6. Robot mobile (100) selon la revendication 1, dans lequel l'unité de détection (130) génère le résultat de projection pour chaque période de détection préétablie afin de transmettre le résultat de projection généré à la commande (1800).

7. Robot mobile (100) selon la revendication 1, dans lequel la commande (1800) génère des informations d'image 3D (DI) sur la base d'un résultat d'accumulation des résultats de projection pendant une période de temps prédéterminée, et convertit les informations d'image 3D (DI) en un format d'image 2D incluant des informations de hauteur pour générer les informations frontales (FI).

8. Robot mobile (100) selon la revendication 1, dans lequel la commande (1800) comporte une unité de reconnaissance qui analyse les informations frontales (FI) pour reconnaître un obstacle correspondant aux informations frontales (FI) de manière à détecter l'obstacle par l'intermédiaire de l'unité de reconnaissance.

9. Robot mobile (100) selon la revendication 8, dans lequel l'unité de reconnaissance stocke un modèle de reconnaissance basé sur un réseau neuronal profond (DL) appris sur une carte par un algorithme d'apprentissage profond ou un algorithme d'apprentissage automatique pour reconnaître un obstacle correspondant aux informations frontales (FI) par l'intermédiaire du modèle de reconnaissance (DL).

10. Robot mobile (100) selon la revendication 1, dans lequel la commande (1800) accumule les résultats de projection lorsque le fonctionnement de l'unité d'entraînement (111) correspond à une condition de fonctionnement préétablie.

11. Robot mobile (100) selon la revendication 10, dans lequel la condition de fonctionnement est une condition pour au moins un élément parmi une condition de rotation de l'unité d'entraînement (111) et une vitesse de rotation de l'unité d'entraînement (111).

12. Robot mobile (100) selon la revendication 1, dans lequel la commande (1800) génère les informations frontales (FI) lorsque le résultat d'accumulation des résultats de projection correspond à une condition d'accumulation préétablie.

13. Robot mobile (100) selon la revendication 1, dans lequel la commande (1800) commande l'entraînement du corps principal (110) en limitant une distance de déplacement du corps principal (110) à une distance prédéterminée ou inférieure, tout en détectant l'obstacle sur la base des informations frontales (FI).

14. Robot mobile (100) selon la revendication 1, dans lequel la commande (1800) détecte un type de l'obstacle sur la base des informations frontales (FI) pour commander l'entraînement du corps principal (100) en réponse au type de l'obstacle.

15. Procédé de commande d'un robot mobile (100), le robot mobile (100) comportant :
un corps principal (110) ;
une unité d'entraînement (111) qui déplace le corps principal (110) ;
une unité de détection (130) qui projette de la lumière de détection (SL) pour détecter la présence ou l'absence d'un obstacle devant le corps principal (110) afin de générer un résultat de projection ; et
une commande (1800) qui détecte un obstacle dans un environnement d'entraînement du corps principal (110) sur la base du résultat de projection de l'unité de détection (130) pour commander l'entraînement du corps principal (110), le procédé comportant les étapes consistant à :
accumuler les résultats de projection de l'unité de détection (130) pendant l'entraînement pendant une période de temps prédéterminée ;
générer des informations frontales (FI) virtuelles dans l'environnement d'entraînement sur la base du résultat d'accumulation des résultats de projection ;
détecter un obstacle dans l'environnement d'entraînement sur la base des informations frontales (FI) ; et
commander l'entraînement du corps principal (110) en fonction du résultat de détection,
**caractérisé en ce que**
à l'étape de génération, la commande (1800) génère les informations frontales (FI) sous la forme d'une surface rectangulaire ayant une taille prédéterminée.
